# EUROPEAN PATENT APPLICATION

(11) **EP 4 708 610 A1**
(43) Date of publication of application: **11.03.2026**
(21) Application number: 25161050.7
(22) Date of filing: 28.02.2025
(51) Int. Cl.: H02J 3/38, H02M 7/493

(54) **INVERTER SYSTEM, POWER ALLOCATION METHOD AND APPARATUS FOR INVERTER SYSTEM, CONTROL APPARATUS, STORAGE MEDIUM, AND PHOTOVOLTAIC POWER STATION**

(30) Priority: 04.09.2024 CN 202411239619
(71) Applicant: Sungrow Power Supply Co., Ltd., Hefei, Anhui 230088 (CN)
(72) Inventor: MA, Yunjian, Hefei, 230088 (CN); LIANG, Cheng, Hefei, 230088 (CN); YAO, Pei, Hefei, 230088 (CN); LI, Xia, Hefei, 230088 (CN); CHEN, Xuejing, Hefei, 230088 (CN); WU, Tingkuan, Hefei, 230088 (CN); ZHOU, Yang, Hefei, 230088 (CN)
(74) Representative: Harrison, Philip Mark

(57) **Abstract**

The present disclosure relates to the field of inverter technologies, and more particularly, to an inverter system, a power allocation method and apparatus for an inverter system, a control apparatus, a storage medium, and a photovoltaic power station. The inverter system includes a plurality of inverters. A direct current side of each of the plurality of inverters is connected to a photovoltaic module, and alternating current sides of the plurality of inverters are connected in parallel. The method includes: obtaining an overload power of each of the plurality of inverters that is in an operating state and a capacity ratio of the photovoltaic module corresponding to each inverter of the plurality of inverters that is in the operating state; and allocating a total target active power of the inverter system based on the overload power of each of the plurality of inverters and the capacity ratio of the photovoltaic module corresponding to each inverter of the plurality of inverters to obtain a target active power of each of the plurality of inverters. In this way, a loss of active power generation caused by uneven installation of the photovoltaic modules can be reduced.

## Description

### FIELD

The present disclosure relates to the field of inverter technologies, and more particularly, to an inverter system, a power allocation method and apparatus for an inverter system, a control apparatus, a storage medium, and a photovoltaic power station.

### BACKGROUND

Generally, a photovoltaic power station includes a plurality of inverter subarrays. Each inverter subarray includes a plurality of inverter units. Each inverter subarray may receive power scheduling instructions from a back-end and allocate power to the plurality of inverter units based on a certain power allocation strategy.

In the related art, power allocation is performed through equal allocation. However, when photovoltaic modules are unevenly installed, there is a large loss of active power generation.

### SUMMARY

The present disclosure aims to solve at least one of the technical problems in the related art to some extent. To this end, an object of the present disclosure is to provide an inverter system, a power allocation method and apparatus for an inverter system, a control apparatus, a storage medium, and a photovoltaic power station. In this way, a loss of active power generation caused by uneven installation of the photovoltaic modules can be reduced.

To achieve the above object, an embodiment in a first aspect of the present disclosure provides a power allocation method for an inverter system. The inverter system includes a plurality of inverters. A direct current side of each of the plurality of inverters is connected to a photovoltaic module, and alternating current sides of the plurality of inverters are connected in parallel. The method includes: obtaining an overload power of each of the plurality of inverters that is in an operating state and a capacity ratio of the photovoltaic module corresponding to each inverter of the plurality of inverters that is in the operating state; and allocating a total target active power of the inverter system based on the overload power of each of the plurality of inverters and the capacity ratio of the photovoltaic module corresponding to each inverter of the plurality of inverters to obtain a target active power of each of the plurality of inverters.

In some embodiments, the allocating the total target active power of the inverter system based on the overload power of each of the plurality of inverters and the capacity ratio of the photovoltaic module corresponding to each inverter of the plurality of inverters to obtain the target active power of each of the plurality of inverters includes: pre-allocating the total target active power based on the capacity ratio of the photovoltaic module corresponding to each inverter of the plurality of inverters to obtain an initial active power of each inverter; and adjusting the initial active power of each inverter based on the overload power and the initial active power of each inverter to obtain the target active power of each inverter.

In some embodiments, the pre-allocating the total target active power based on the capacity ratio of the photovoltaic module corresponding to each inverter of the plurality of inverters to obtain the initial active power of each inverter includes: obtaining a total capacity ratio of photovoltaic modules corresponding to the plurality of inverters; and obtaining a ratio of the capacity ratio of the photovoltaic module corresponding to each inverter to the total capacity ratio, and obtaining a product of the ratio and the total target active power to obtain the initial active power of each inverter.

In some embodiments, the adjusting the initial active power of each inverter based on the overload power and the initial active power of each inverter to obtain the target active power of each inverter includes: sorting the plurality of inverters in a descending order of initial active powers of the plurality of inverters; in response to an initial active power of an i-th inverter being greater than an overload power of the i-th inverter, determining the overload power as the target active power of the i-th inverter; obtaining an active power difference between the initial active power of the i-th inverter and the overload power of the i-th inverter; allocating the active power difference based on the capacity ratio of the photovoltaic module corresponding to each inverter from the (i+1)-th inverter to the n-th inverter to obtain a power adjustment amount of each inverter from the (i+1)-th inverter to the n-th inverter; and obtaining a sum of the power adjustment amount and an initial active power of each inverter from the (i+1)-th inverter to the n-th inverter to update the initial active power of each inverter from the (i+1)-th inverter to the n-th inverter and updating i=i+1, and returning to the step of determining the overload power as the target active power of the i-th inverter in response to the initial active power of the i-th inverter being greater than the overload power of the i-th inverter, where 1≤i<n, n is a total number of the plurality of inverters that are in an operating state, and i starts from 1.

In some embodiments, the method further includes, subsequent to the obtaining the target active power of each of the plurality of inverters: allocating a total target reactive power of the inverter system based on the target active power and a rated reactive power of each inverter to obtain a target reactive power of each inverter.

In some embodiments, the allocating the total target reactive power of the inverter system based on the target active power and the rated reactive power of each inverter to obtain the target reactive power of each inverter includes: determining a maximum reactive power of each inverter based on the target active power and an apparent power of each inverter; pre-allocating the total target reactive power based on the maximum reactive power of each inverter to obtain an initial reactive power of each inverter; and determining the target reactive power of each inverter based on the initial reactive power, the rated reactive power, the maximum reactive power, and the target active power of each inverter.

In some embodiments, the pre-allocating the total target reactive power based on the maximum reactive power of each inverter to obtain an initial reactive power of each inverter includes: obtaining a total maximum reactive power of the plurality of inverters; and obtaining a ratio of the maximum reactive power of each inverter to the total maximum reactive power of the plurality of inverters, and obtaining a product of the ratio and the total target reactive power to obtain the initial reactive power of each inverter.

In some embodiments, the determining the target reactive power of each inverter based on the initial reactive power, the rated reactive power, the maximum reactive power, and the target active power of each inverter includes: sorting the plurality of inverters in a descending order of initial reactive powers of the plurality of inverters; obtaining a difference between the total target active power and a sum of target active powers of all inverters ranking higher than an j-th inverter to obtain a remaining total active power; in response to the remaining total active power being smaller than a product of a reactive power of the j-th inverter and a number of inverters from the j-th inverter to the n-th inverter, and the initial reactive power of the j-th inverter is greater than a rated reactive power of the j-th inverter, determining the rated reactive power as the target reactive power of the j-th inverter, the reactive power of the j-th inverter being a smaller value among a maximum reactive power of the j-th inverter and the rated reactive power of the j-th inverter; and obtaining a reactive power difference between the initial reactive power of the j-th inverter and the rated reactive power of the j-th inverter, and obtaining a sum of the reactive power difference and the initial reactive power of an (j+1)-th inverter to update the initial reactive power of the (j+1)-th inverter and updating j=j+1, and returning to the step of obtaining the difference between the total target active power and the sum of target active powers of all inverters ranking higher than the j-th inverter to obtain the remaining total active power, where 1≤j<n, n is a total number of inverters that are in an operating state, and j starts from 1.

In some embodiments, the determining the target reactive power of each inverter based on the initial reactive power, the rated reactive power, the maximum reactive power, and the target active power of each inverter further includes: in response to the remaining total active power being greater than or equal to a product of the reactive power of the j-th inverter and the number of inverters from the j-th inverter to the n-th inverter, obtaining a ratio of the remaining total active power to the number of inverters from the j-th inverter to the n-th inverter to obtain a target reactive power of each inverter from the j-th inverter to the n-th inverter and updating j=j+1, and returning to the step of obtaining the difference between the total target active power and the sum of target active powers of all inverters ranking higher than the j-th inverter to obtain the remaining total active power.

To achieve the above objects, an embodiment in a second aspect of the present disclosure provides a control apparatus. The control apparatus includes: a memory having a program, instructions, or codes stored thereon; and a processor configured to execute the program, the instructions, or the codes in the memory to perform the power allocation method for the inverter system according to the above embodiments.

To achieve the above objects, an embodiment in a third aspect of the present disclosure provides a computer-readable storage medium. The computer-readable storage medium has a computer program stored thereon. The computer program, when loaded by a processor, performs the power allocation method for the inverter system according to the above embodiments.

To achieve the above objects, an embodiment in a fourth aspect of the present disclosure provides a power allocation apparatus for an inverter system. The inverter system includes a plurality of inverters. A direct current side of each of the plurality of inverters is connected to a photovoltaic module, and alternating current sides of the plurality of inverters are connected in parallel. The apparatus includes: an obtaining module configured to obtain an overload power of each of the plurality of inverters that is in an operating state and a capacity ratio of the photovoltaic module corresponding to each inverter of the plurality of inverters that is in the operating state; and an allocation module configured to allocate a total target active power of the inverter system based on the overload power of each of the plurality of inverters and the capacity ratio of the photovoltaic module corresponding to each inverter of the plurality of inverters to obtain a target active power of each of the plurality of inverters.

To achieve the above objects, an embodiment in a fifth aspect of the present disclosure provides an inverter system. The inverter system includes the control apparatus, the computer-readable storage medium, or the power allocation apparatus for the inverter system according to the above.

To achieve the above objects, an embodiment in a sixth aspect of the present disclosure provides a photovoltaic power station. The photovoltaic power station includes the control apparatus, the computer-readable storage medium, the power allocation apparatus for the inverter system, or the inverter system according to the above.

With the inverter system, the power allocation method and apparatus for the inverter system, the control apparatus, the storage medium, and the photovoltaic power station according to embodiments of the present disclosure, the overload power of each of the plurality of inverters that is in the operating state and the capacity ratio of the photovoltaic module corresponding to each inverter of the plurality of inverters that is in the operating state are obtained and the total target active power of the inverter system is allocated based on the overload power of each of the plurality of inverters and the capacity ratio of the photovoltaic module corresponding to each inverter of the plurality of inverters to obtain the target active power of each of the plurality of inverters. In this way, a loss of active power generation caused by uneven installation of the photovoltaic modules can be reduced, avoiding that the active power cannot meet test conditions in some testing scenarios.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a structural schematic diagram of a photovoltaic grid-connected system according to an embodiment of the present disclosure.
FIG. 2 is a flowchart illustrating a power allocation method for an inverter system according to an embodiment of the present disclosure.
FIG. 3 is a flowchart illustrating an active power allocation method according to an embodiment of the present disclosure.
FIG. 4 is a flowchart illustrating an active power allocation method according to another embodiment of the present disclosure.
FIG. 5 is a flowchart illustrating a reactive power allocation method according to an embodiment of the present disclosure.
FIG. 6 is a flowchart illustrating a reactive power allocation method according to another embodiment of the present disclosure.
FIG. 7 is a flowchart illustrating a reactive power allocation method according to yet another embodiment of the present disclosure.
FIG. 8 is a structural schematic diagram of a control apparatus according to an embodiment of the present disclosure.
FIG. 9 is a structural schematic diagram of a power allocation apparatus for an inverter system according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, the embodiments of the present disclosure.

In the embodiments of the present disclosure, an inverter system includes a plurality of inverters. A direct current side of each of the plurality of inverters is connected to a photovoltaic module, and alternating current sides of the plurality of inverters are connected in parallel.

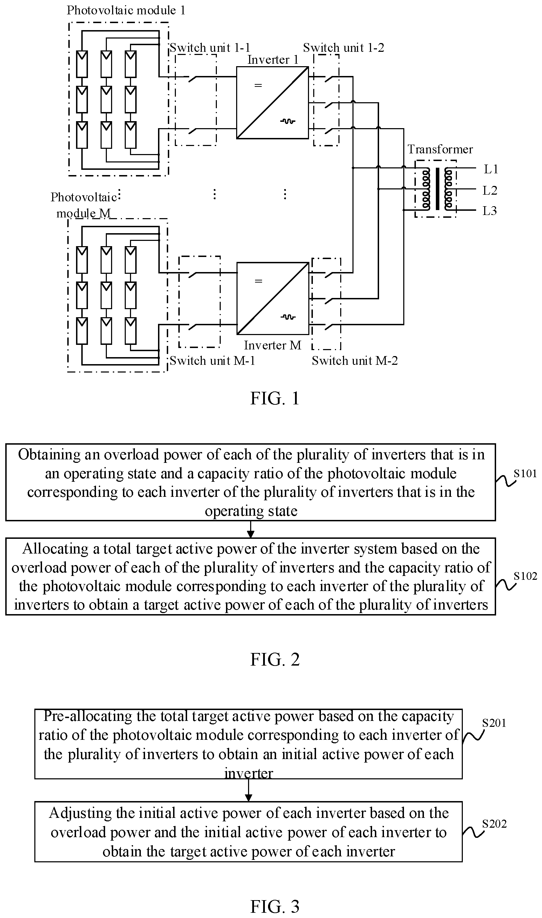

Exemplarily, as illustrated in FIG. 1, the inverter system includes M inverters, namely Inverter 1, ..., Inverter M, where M is an integer greater than 1. The direct current side of each inverter is connected to the photovoltaic module. For example, a direct current side of the Inverter 1 is connected to a photovoltaic module 1 through a switch unit 1-1, ..., and a direct current side of the Inverter M is connected to a photovoltaic module M through a switch unit M-1. Alternating current sides of M inverters are connected in parallel. For example, an alternating current side of the Inverter 1 is connected to a secondary winding of a transformer through a switch unit 1-2, ..., an alternating current side of the Inverter M is connected to the secondary winding of the transformer through a switch unit M-2, and a primary winding of the transformer is connected to three-phase power lines L1, L2, and L3 of an alternating current grid.

It should be noted that specific structures and types of the photovoltaic module, the inverter, and the switch unit in FIG. 1 are not limited here. For example, the inverter may be a string inverter or a centralized inverter, and FIG. 1 is merely an exemplary illustration, and is not intended to limit the present disclosure.

During operation, the inverter system may receive power scheduling instructions from a back-end and allocate power to a plurality of inverter system units based on a certain power allocation strategy. In the related art, power allocation is performed through equal allocation. However, when photovoltaic modules are unevenly installed, there is a large loss of active power generation.

On this basis, a power allocation method is provided according to the embodiments of the present disclosure. An overload power of each of the plurality of inverters that is in an operating state and a capacity ratio of the photovoltaic module corresponding to each inverter of the plurality of inverters that is in the operating state are obtained and a total target active power of the inverter system is allocated to the plurality of inverters based on the overload power of each of the plurality of inverters and the capacity ratio of the photovoltaic module corresponding to each inverter of the plurality of inverters, and thus the loss of active power generation caused by uneven installation of the photovoltaic modules can be reduced.

FIG. 2 is a flowchart illustrating a power allocation method for an inverter system according to an embodiment of the present disclosure.

As illustrated in FIG. 2, the power allocation method for the inverter system includes operations at blocks.

At block S101, an overload power of each of the plurality of inverters that is in an operating state and a capacity ratio of the photovoltaic module corresponding to each inverter of the plurality of inverters that is in the operating state are obtained.

It should be noted that an overload capacity of the inverter refers to an ability of the inverter to sustain a maximum output power greater than a rated power of the inverter. The overload power of the inverter refers to a maximum output power that the inverter can continuously output. For example, when the rated power of the inverter is 50KW and the maximum output power that the inverter can continuously output is 55KW, the overload capacity of the inverter is 110% and the overload power is 55KW. It should be noted that when the inverter has no overload capacity, the overload power of the inverter is the rated power of the inverter. Overload powers of the plurality of inverters may be the same or different. In general, the overload powers of the plurality of inverters are the same, and the overload powers are known parameters, which can be stored in a database in advance.

The capacity ratio of the photovoltaic module corresponding to each inverter refers to a ratio of a sum of capacity of the photovoltaic module connected to the inverter to a rated capacity of the inverter. This ratio reflects a matching degree between the photovoltaic module and the inverter. The capacity of the photovoltaic module refers to a rated power of the photovoltaic module. The rated capacity of the inverter refers to a rated power of the inverter. For example, in FIG. 1, a capacity ratio of a photovoltaic module 1 corresponding to an inverter 1 refers to a ratio of a sum of capacity of the photovoltaic module 1 to a rated capacity of the inverter 1. For different sites, photovoltaic modules installed for respective inverters in an inverter system may not be even, and thus an installation capacity may be smaller than the overload power or rated capacity of the inverter. Therefore, before implementing the power allocation method according to the embodiments of the present disclosure, the capacity ratio can be set based on a capacity of the installed photovoltaic module, or the capacity ratio of the photovoltaic module corresponding to each inverter can be identified through a self-learning process.

At block S102, a total target active power of the inverter system is allocated based on the overload power of each of the plurality of inverters and the capacity ratio of the photovoltaic module corresponding to each inverter of the plurality of inverters to obtain a target active power of each of the plurality of inverters.

Exemplarily, during the operation of the inverter system, a controller of the inverter system can receive active power instructions from control devices such as a back-end. These active power instructions include the total target active power of the inverter system. The controller then determines which inverters are currently in the operating state and obtains from the database the pre-determined overload power of each inverter in the operating state and a capacity ratio of the photovoltaic module corresponding to the inverter. Based on the overload power of each inverter and the capacity ratio of the corresponding photovoltaic module, the controller allocates the total target active power of the inverter system, to obtain the target active power of each inverter. Since the capacity ratio of the photovoltaic module corresponding to the inverter is related to the installation capacity of the photovoltaic module, when the active power is allocated based on the capacity ratio and the overload capacity, the active power can be output to the maximum extent under the condition of meeting the capacity ratio as much as possible, effectively reducing the loss of active power generation caused by uneven installation of the photovoltaic modules.

In the above embodiments, by obtaining the overload power of each of the plurality of inverters that is in the operating state and the capacity ratio of the photovoltaic module corresponding to each inverter of the plurality of inverters that is in the operating state and allocating the total target active power of the inverter system based on the overload power of each of the plurality of inverters and the capacity ratio of the photovoltaic module corresponding to each inverter of the plurality of inverters to obtain the target active power of each of the plurality of inverters, the loss of active power generation caused by uneven installation of the photovoltaic module can be reduced, avoiding that the active power cannot meet test conditions in some testing scenarios.

In some embodiments, as illustrated in FIG. 3, the allocating the total target active power of the inverter system based on the overload power of each of the plurality of inverters and the capacity ratio of the photovoltaic module corresponding to each inverter of the plurality of inverters to obtain the target active power of each of the plurality of inverters includes operations at blocks S201 to S202.

At block S201, the total target active power is pre-allocated based on the capacity ratio of the photovoltaic module corresponding to each inverter of the plurality of inverters to obtain an initial active power of each inverter.

Exemplarily, the controller can pre-allocate the total target active power based on the capacity ratio of the photovoltaic module corresponding to each inverter to obtain the initial active power of each inverter. There are multiple ways to perform this allocation, for example, which can be done based on a predetermined proportional relationship.

In some embodiments, the pre-allocating the total target active power based on the capacity ratio of the photovoltaic module corresponding to each inverter of the plurality of inverters to obtain the initial active power of each inverter includes: obtaining a total capacity ratio of photovoltaic modules corresponding to the plurality of inverters; and obtaining a ratio of the capacity ratio of the photovoltaic module corresponding to each inverter to the total capacity ratio, and obtaining a product of the ratio and the total target active power to obtain the initial active power of each inverter.

As an example, an inverter A, an inverter B, an inverter C, and an inverter D are in the operating state. Assuming that capacity ratios of photovoltaic modules corresponding to the inverter A, the inverter B, the inverter C and the inverter D are K1, K2, K3, and K4, respectively, and the total target active power is Pset, an initial active power PA of Inverter A is calculated as PA=Pset * K1 / (K1 + K2 + K3 + K4), an initial active power PB of Inverter B is calculated as PB=Pset * K2 / (K1 + K2 + K3 + K4), an initial active power PC of Inverter C is calculated as PC=Pset * K3 / (K1 + K2 + K3 + K4), and an initial active power PD of Inverter D is calculated as PD=Pset * K4 / (K1 + K2 + K3 + K4).

At block S202, the initial active power of each inverter is adjusted based on the overload power and the initial active power of each inverter to obtain the target active power of each inverter.

It should be noted that the initial active power of each inverter obtained based on the capacity ratio may be greater than the overload power of the inverter, and thus the initial active power of each inverter may be adjusted based on the overload power of each inverter to output as much active power as possible under the condition that the capacity ratio is satisfied as much as possible.

Exemplarily, after obtaining the initial active power of each inverter, the controller calculates and determines the target active power of each inverter based on the initial active power. For example, the initial active power of each inverter may be adjusted based on the overload power and the initial active power of each inverter to obtain the target active power of each inverter. There are various specific adjustment methods. For example, the part of the power exceeding the overload capacity of the inverter may be imposed to other inverters.

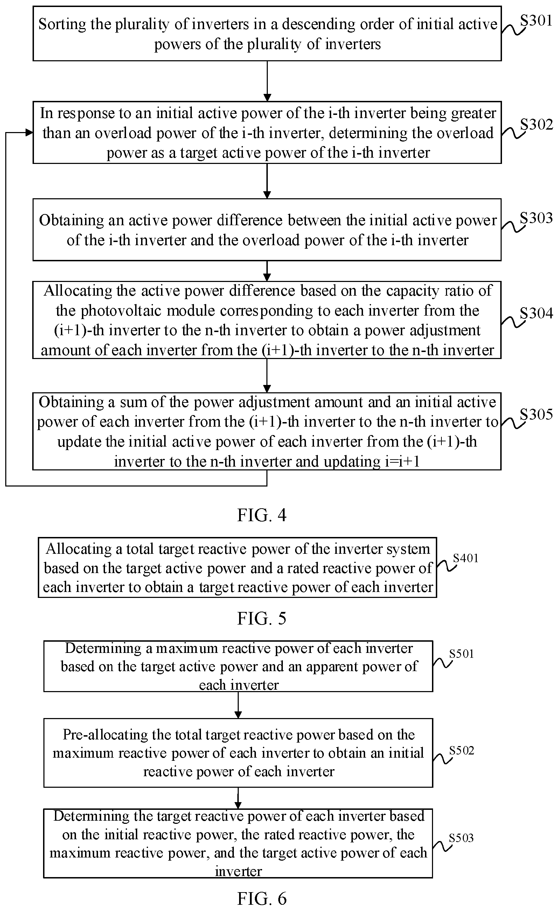

In some embodiments, as illustrated in FIG. 4, the adjusting the initial active power of each inverter based on the overload power and the initial active power of each inverter to obtain the target active power of each inverter includes operations at blocks S301 to S305.

At block S301, the plurality of inverters is sorted in a descending order of initial active powers of the plurality of inverters.

At block S302, in response to an initial active power of an i-th inverter being greater than an overload power of the i-th inverter, the overload power is determinined as the target active power of the i-th inverter.

At block S303, an active power difference between the initial active power of the i-th inverter and the overload power of the i-th inverter is obtained.

At block S304, the active power difference is allocated based on the capacity ratio of the photovoltaic module corresponding to each inverter from the (i+1)-th inverter to the n-th inverter to obtain a power adjustment amount of each inverter from the (i+1)-th inverter to the n-th inverter.

At block S305, a sum of the power adjustment amount and an initial active power of each inverter from the (i+1)-th inverter to the n-th inverter is obtained to update the initial active power of each inverter from the (i+1)-th inverter to the n-th inverter and i=i+1 is updated, and the step of determining the overload power as the target active power of the i-th inverter in response to the initial active power of the i-th inverter being greater than the overload power of the i-th inverter is returned.

It should be noted that in this embodiment, 1≤i<n, where n is a total number of the plurality of inverters that are in the operating state, and i starts from 1.

Exemplarily, the controller may sort the initial active power in the descending order, then compare the initial active power of a maximum value with the overload power of the inverter. When the initial active power of the maximum value is greater than the overload power (that is, exceeds the overload capacity of the inverter), an excess active power is allocated and imposed to the remaining inverter based on a capacity ratio of a photovoltaic module corresponding to the remaining inverter, and adjustment of the initial active power of each inverter is completed in a similar way, to obtain the target active power of each inverter.

In the above example, the inverter A, the inverter B, the inverter C, and the inverter D are in the operating state. Assuming that PA>PB>PC>PD, overload power of each of the inverter A, the inverter B, the inverter C, and the inverter D is Pm, and PA>Pm. A target active power PArealset of the inverter A is PArealset=Pm. The updated initial active power PB' of the inverter B is calculated as PB'=PB+(PA-Pm)*K2/(K2+K3+K4). The updated initial active power PC' of the inverter C is calculated as PC'=PC+(PA-Pm)*K3/(K2+K3+K4). The updated initial active power PD' of the inverter D is calculated as PD'=PD+(PA-Pm)*K4/(K2+K3+K4).

When the updated initial active power PB' of the inverter B is greater than Pm (PB' >Pm), a target active power PBrealset of the inverter B is PBrealset=Pm, the further updated initial active power PC" of the inverter C is calculated as PC"=PC'+(PB'-Pm)*K3/(K3+K4), and the further updated initial active power PD" of the inverter D is calculated as PD"=PD'+(PB'-Pm)*K4/(K3+K4).

When the further updated initial active power PC" of the inverter C is smaller than or equal to Pm (PC"≤Pm), a target active power PCrealset of the inverter C is PCrealset=PC", and a target active power PDrealset of the inverter D is PDrealset=PD".

In this way, it is possible to maximize output of the active power based on the overload capacity of the inverter while trying to satisfy the capacity ratio as much as possible. Since the capacity ratio is related to the installation capacity of the photovoltaic module, the loss of the active power generation caused by uneven installation of the photovoltaic modules can be reduced.

In the above embodiments, the capacity ratio of the photovoltaic module corresponding to each inverter is comprehensively considered. The total target active power is pre-allocated based on the capacity ratio, and the initial active power obtained from this pre-allocation is compared with the overload capacity of each inverter to determine a final target active power. In this way, a maximum active power output can be ensured and power generation can be guaranteed even under conditions of uneven installation or uneven lighting of the photovoltaic modules.

In some embodiments, as illustrated in FIG. 5, the method further includes, subsequent to the obtaining the target active power of each of the plurality of inverters, operations at block S401.

At block S401, a total target reactive power of the inverter system is allocated based on the target active power and a rated reactive power of each inverter to obtain a target reactive power of each inverter.

It should be noted that, when the inverter system only needs to output the active power, the target active power of each inverter can be determined based on the aforementioned method, and then each inverter can be controlled based on the target active power of the inverter. For example, the target active power can be provided to a current inner loop of the inverter to achieve active power control.

When the inverter system needs to output the active power and the reactive power, the target active power of each inverter can be determined according to the aforementioned method. Then, reactive power allocation is performed on the total target reactive power of the inverter system based on the target active power of each inverter to obtain the target reactive power of each inverter. Then, active power control and reactive power control of each inverter are realized based on the target active power and the target reactive power. For example, the target active power and the target reactive power are provided to the current inner loop of the inverter to realize power control. It should be noted that since an apparent power of each inverter is constant, when the reactive power increases, the corresponding actual active power output may decrease.

Exemplarily, after obtaining the target active power of each inverter, the controller can perform reactive power allocation on the total target reactive power based on the target active power and the rated reactive power, to determine the target reactive power of each inverter.

In the above embodiments, an impact of reactive power on the active power is taken into account. Based on the active power and in conjunction with the rated reactive power, the target reactive power of each inverter is determined. Therefore, optimal allocation of the active power and the reactive power can be achieved under the premise of maximizing generation of the active power as much as possible.

In some embodiments, as illustrated in FIG. 6, the allocating the total target reactive power of the inverter system based on the target active power and the rated reactive power of each inverter to obtain the target reactive power of each inverter includes operations at blocks S501 to S503.

At block S501, a maximum reactive power of each inverter is determined based on the target active power and an apparent power of each inverter.

The apparent power of the inverter is a known parameter and may be stored in the database in advance.

Exemplarily, the controller may calculate the maximum reactive power of each inverter according to a formula of Qrealmax=sqrt(Sn^2-Prealset^2), where Qrealmax is a maximum reactive power of the inverter, Sn is an apparent power of the inverter, and Prealset is a target active power of the inverter.

At block S502, the total target reactive power is pre-allocated based on the maximum reactive power of each inverter to obtain an initial reactive power of each inverter.

Exemplarily, the controller can pre-allocate the total target reactive power based on the maximum reactive power of each inverter to obtain the initial reactive power of each inverter. There are multiple ways to perform this allocation, for example, which can be done based on a predetermined proportional relationship.

In some embodiments, the pre-allocating the total target reactive power based on the maximum reactive power of each inverter to obtain an initial reactive power of each inverter includes: obtaining a total maximum reactive power of the plurality of inverters; and obtaining a ratio of the maximum reactive power of each inverter to the total maximum reactive power of the plurality of inverters, and obtaining a product of the ratio and the total target reactive power to obtain the initial reactive power of each inverter.

In the above example, the inverter A, the inverter B, the inverter C, and the inverter D are in the operating state. Assuming that maximum reactive powers of the inverter A, the inverter B, the inverter C, and the inverter D are QArealmax, QBrealmax, QCrealmax, and QDrealmax, respectively, and a total target reactive power is Qset, an initial reactive power QA of the inverter A is calculated as QA=Qset*QArealmax/QZrealmax, where a total maximum reactive power QZrealmax is calculated as QZrealmax=QArealmax+QBrealmax+QCrealmax+QDrealmax, an initial reactive power QB of the inverter B is calculated as QB=Qset*QBrealmax/QZrealmax, an initial reactive power QC of the inverter C is calculated as QC=Qset*QCrealmax/QZrealmax, and an initial reactive power QD of the inverter D is calculated as QD=Qset*QDrealmax/QZrealmax.

At block S503, the target reactive power of each inverter is determined based on the initial reactive power, the rated reactive power, the maximum reactive power, and the target active power of each inverter.

It should be noted that when an active power capability is greater than or equal to a reactive power capability, the target reactive power of each inverter can be determined based on the target active power, to meet reactive power demands while minimizing reduction of the active power as much as possible. When an active power output capability is less than a reactive power output capability, the target reactive power of each inverter can be determined based on the initial reactive power and the rated reactive power. For example, the initial reactive power of each inverter obtained based on the maximum reactive power may exceed the rated reactive power of each inverter. Therefore, the initial reactive power of each inverter can be adjusted based on the rated reactive power of each inverter, to meet the reactive power demands while minimizing the reduction of the active power as much as possible.

Exemplarily, the controller can determine the target reactive power of each inverter based on the target active power of the inverter when the active power output capability is greater than or equal to the reactive power output capability. When the active power output capability is less than the reactive power output capability, after obtaining the initial reactive power of each inverter, the controller can calculate and determine the target reactive power of each inverter based on the initial reactive power. For instance, the initial reactive power of each inverter can be adjusted based on the rated reactive power and the initial reactive power of each inverter, to obtain the target reactive power of each inverter. There are multiple ways to perform this adjustment. For example, the part of power that exceeds the rated reactive power of the inverter can be imposed to other inverters.

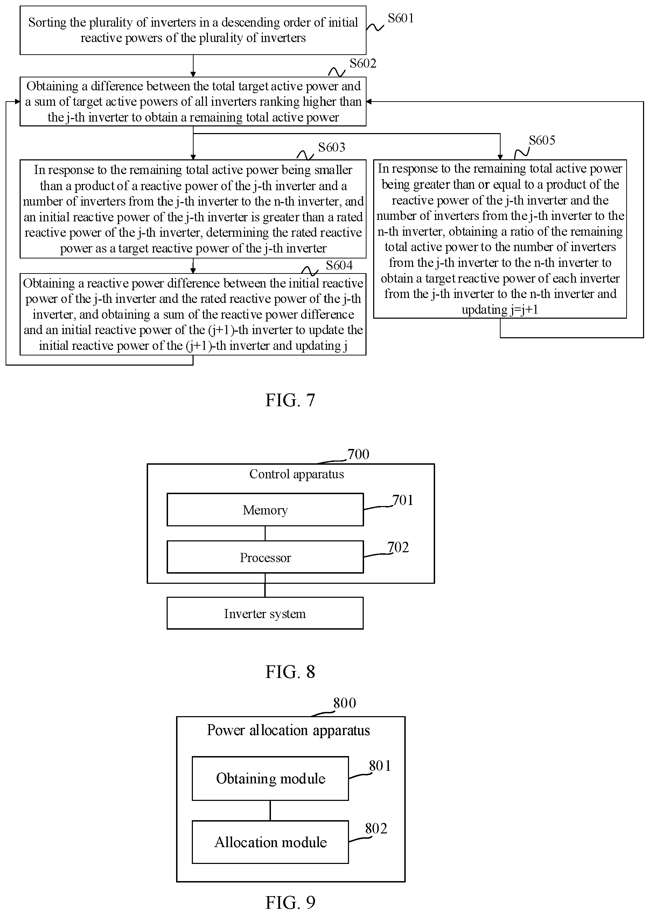

In some embodiments, as illustrated in FIG. 7, the determining the target reactive power of each inverter based on the initial reactive power, the rated reactive power, the maximum reactive power, and the target active power of each inverter includes operations at blocks S601 to S605.

At block S601, the plurality of inverters is sorted in a descending order of initial reactive powers of the plurality of inverters.

At block S602, a difference between the total target active power and a sum of target active powers of all inverters ranking higher than an j-th inverter are obtained to obtain a remaining total active power.

At block S603, in response to the remaining total active power being smaller than a product of a reactive power of the j-th inverter and a number of inverters from the j-th inverter to the n-th inverter, and an initial reactive power of the j-th inverter is greater than a rated reactive power of the j-th inverter, the rated reactive power is determined as the target reactive power of the j-th inverter. The reactive power of the j-th inverter is a smaller value among a maximum reactive power of the j-th inverter and the rated reactive power of the j-th inverter.

At block S604, a reactive power difference between the initial reactive power of the j-th inverter and the rated reactive power of the j-th inverter is obtained, and a sum of the reactive power difference and an initial reactive power of an (j+1)-th inverter is obtained to update the initial reactive power of the (j+1)-th inverter, and j=j+1 is updated, and the step of obtaining the difference between the total target active power and the sum of target active powers of all inverters ranking higher than the j-th inverter to obtain the remaining total active power is returned.

At block S605, in response to the remaining total active power being greater than or equal to a product of the reactive power of the j-th inverter and the number of inverters from the j-th inverter to the n-th inverter, a ratio of the remaining total active power to the number of inverters from the j-th inverter to the n-th inverter is obtained to obtain a target reactive power of each inverter from the j-th inverter to the n-th inverter and j=j+1 is updated, and the step of obtaining the difference between the total target active power and the sum of target active powers of all inverters ranking higher than the j-th inverter to obtain the remaining total active power is returned.

It should be noted that in the above embodiments, 1≤i<n, and j starts from 1.

Exemplarily, the controller can sort the initial reactive powers in a descending order. Then, the controller can obtain the remaining total active power, which is calculated as the remaining total active power is equal to the total target active power minus the sum of the target active powers of all inverters ranking higher than the j-th inverter. When the remaining total active power is greater than or equal to the product of the reactive power of the j-th inverter and the number of inverters from the j-th inverter to the n-th inverter (i.e., when the active power output capability is greater than or equal to the reactive power output capability), the remaining total active power is evenly allocated among the inverters from the j-th inverter to the n-th inverter, to obtain the target reactive power of each inverter from the j-th inverter to the n-th inverter. When the remaining total active power is smaller than the product of the reactive power of the j-th inverter and the number of inverters from the j-th inverter to the n-th inverter (i.e., when the active power output capability is less than the reactive power output capability), an initial reactive power of the j-th inverter of a maximum value is compared with the rated reactive power of the j-th inverter. When the initial reactive power exceeds the rated reactive power (i.e., exceeds the inverter's reactive power output capability), the excess reactive power is imposed to an inverter having a next highest initial reactive power (i.e., the (j+1)-th inverter), and this process continues until the initial reactive power of each inverter is adjusted, to obtain the target reactive power of each inverter.

In the above example, the inverter A, the inverter B, the inverter C, and the inverter D are in the operating state. Assuming that QA>QB>QC>QD, rated reactive powers of the inverter A, the inverter B, the inverter C, and the inverter D are all PN, and QA>PN.

For the first inverter A: the remaining total active power Ps is equal to the total target active power Pset minus the sum of the target active powers of all inverters ranking higher than the first inverter A. Since there is no inverter ranking higher than the first inverter A, the sum of the target active powers of all inverters ranking higher than the first inverter A is zero, and the remaining total active power Ps is equal to the total target active power Pset in this case. When the remaining total active power Ps is smaller than a product of a reactive power of the first inverter and a number of inverters from the first inverter to the fourth inverter. That is, Ps<min(QArealmax, QN)*4, then a target reactive power QArealset of the first inverter A is QArealset=QN. The updated initial reactive power QB' of the second inverter B is calculated as QB'=QB+(QA-QN). When the remaining total active power Ps is greater than or equal to the product of the reactive power of the first inverter and the number of inverters from the first inverter to the fourth inverter. That is, Ps≥min(QArealmax, QN)*4, then a target reactive power of each of the inverter A, the inverter B, the inverter C, and the inverter D from the first inverter to the fourth inverter is Ps/4.

For the second inverter B: the remaining total active power Ps' is equal to the total target active power Pset minus a sum of target active powers of all inverters ranking higher than the second inverter B. Since there is one inverter (inverter A) ranking higher than the second inverter B, the sum of the target active powers of all inverters ranking higher than the second inverter B is a target active power PArealset of the first inverter A, and in this case Ps=Pset-PArealset. When the remaining total active power Ps' is smaller than a product of a reactive power of the second inverter and the number of inverters from the second inverter to the fourth inverter. That is, Ps'<min(QBrealmax, QN)*3, then when the updated initial reactive power QB' of the inverter B is greater than QN (QB'>QN), the target reactive power QBrealset for the second inverter B is QBrealset=QN, and the updated initial reactive power QC' of the third inverter C is calculated as QC'=QC+(QB'-QN). When the remaining total active power Ps' is greater than or equal to the product of a reactive power of the second inverter B and the number of inverters from the second inverter to the fourth inverter, i.e., Ps' ≥min(QBrealmax, QN)*3, the target reactive power of each of the inverter B, the inverter C, and the inverter D from the second inverter to the fourth inverter is Ps'/3.

By analogy, the target reactive power of the third inverter and the fourth inverter can be obtained.

In the above embodiments, the impact of the reactive power on the active power is considered. Based on the target active power of each inverter, the maximum reactive output capability of each inverter is calculated under the condition of not reducing the active power. The total target reactive power is pre-allocated based on a proportion of the maximum reactive output capability. In addition, the final target reactive power is determined by considering the rated reactive output capability of each inverter. Therefore, the reactive power is allocated while minimizing a loss of the active power, allowing each inverter to generate as much active power as possible, ensuring the maximum active power output and the power generation, and thus meeting practical engineering application requirements.

Technical effects of the power allocation method according to the embodiments of the present disclosure are described below by comparing examples.

As an example, a 4.4MW inverter system is used. The inverter system includes four inverters which are connected in parallel on the alternating current sides. Each inverter has an apparent power of 1.1 MW and a rated reactive power of 0.66 MW. Capacity ratios of photovoltaic modules corresponding to the four inverters are 1.2, 1.1, 0.9, and 0.8, respectively (corresponding maximum active power output capabilities are 1.32 MW, 1.21 MW, 0.99 MW, and 0.88 MW). The total target active power is 4 MW, and the total target reactive power is 2.2 MW.

For Scheme 1, the total target active power and the total target reactive power are evenly allocated: a target active power of each of the four inverters is 1MW, and a target reactive power of each of the four inverters is 0.55 MW. Under conditions where light is sufficient for full power generation, active power outputs of the four inverters are 0.9526 MW, 0.9526 MW, 0.9526 MW, and 0.88 MW, respectively, with a total active power output of 3.7378 MW. Reactive power outputs of the four inverters are all 0.55 MW, with a total reactive power output of 2.2 MW. When the total target reactive power is changed to 0, the total active power output of the four inverters is 1MW+1MW+0.99MW+0.88 MW=3.87MW.

For Scheme 2, the power allocation method according to the embodiments of the present disclosure is adopted to allocate the active power and the reactive power. Target active powers of the four inverters are 1.1MW, 1.1MW, 0.9529MW, and 0.8471MW, respectively, and target reactive powers are 0.49522MW, 0.49522MW, 0.54945MW, and 0.66MW, respectively. Under the conditions where light is sufficient for full power generation, active power outputs of the four inverters are 0.98219 MW, 0.98219MW, 0.9529MW, and 0.8471MW, respectively, total active power outputs of the four inverters are 3.7644MW, and total reactive power outputs of the four inverters are 2.2 MW. When the total target reactive power is changed to 0, the total active power outputs of the four inverters are 4MW.

Through comparison of the above embodiments, the power allocation method according to the embodiments of the present disclosure can minimize the loss of the active power regardless of whether the reactive power is considered, and can generate as much active power as possible in a case of uneven installation of photovoltaic modules.

In summary, the power allocation method for the inverter system according to the embodiments of this disclosure comprehensively considers the capacity ratio of the photovoltaic module corresponding to each inverter. The total target active power is pre-allocated based on the capacity ratio and then the pre-allocated initial active power is compared with the overload capacity of each inverter to determine the final target active power. This ensures maximum active power output and guarantees power generation even when the photovoltaic modules are installed unevenly or under non-uniform lighting conditions. In addition, the method takes into account the impact of the reactive power on the active power. Based on the target active power of each inverter, the maximum reactive output capacity of each inverter is calculated without reducing the active power. The total target reactive power is pre-allocated according to the proportion of the maximum reactive output capabilities. Further, the final target reactive power is determined by considering the rated reactive output capacity of each inverter. Therefore, the reactive power is allocated while minimizing the loss of the active power, allowing each inverter to generate as much active power as possible, ensuring the maximum active power output, and guaranteeing power generation. This method meets the practical engineering application requirements.

In some embodiments, a control apparatus is also provided.

In one possible embodiment, as illustrated in FIG. 8, the control apparatus 700 may include a memory 701 and a processor 702. The processor 702 may be connected to the inverter system and may be configured to drive an inverter in the inverter system. As illustrated in FIG. 8, the memory 701 may be a Random Access Memory (RAM), a flash memory, a Read Only Memory (ROM), an EPROM memory, a non-volatile Read Only Memory (Electronic Programmable ROM, EPROM), a register, a hard disk, a removable magnetic disk, or the like.

The memory 701 may store computer instructions. When the computer instructions stored in the memory 701 are executed by the processor 702, the processor 702 may be configured to perform the power allocation method for the inverter system. The memory 701 may also store data, for example, information such as the capacity ratio and the overload power related to the above-described embodiments.

In the above-described embodiments, it may be implemented in whole or in part by software, hardware, firmware, or any combination thereof. When implemented by using the software, it may be fully or partially implemented in the form of a computer program product. The computer program product includes one or more computer instructions. When computer program instructions are loaded and executed on a computer, processes or functions according to the embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium. For example, the computer instructions may be transmitted from one computer to another computer by wired (e.g., a coaxial cable) or wireless (e.g., infrared, wireless, microwave) means. The computer-readable storage medium may be any available medium accessible by a computer or a data storage device integrated with one or more available media. The available medium may be a magnetic medium (e.g., a floppy disk, a hard disk, a magnetic tape), or a semiconductor medium (e.g., a solid state disk (SSD)), or the like.

In some embodiments, a readable storage medium is further provided for storing the method or algorithm provided by the above embodiments. For example, the storage medium may be a Random Access Memory (RAM), a flash memory, a Read-Only Memory (ROM), an EPROM, a non-volatile Read Only Memory (Electronic Programmable ROM, EPROM), a register, a hard disk, a removable disk, or any other form of storage medium known in the field.

In some embodiments, a power allocation apparatus for an inverter system is further provided.

The inverter system includes a plurality of inverters. A direct current side of each of the plurality of inverters is connected to a photovoltaic module, and alternating current sides of the plurality of inverters are connected in parallel.

As illustrated in FIG. 9, the power allocation apparatus 800 for the inverter system includes: an obtaining module 801 configured to obtain an overload power of each of the plurality of inverters that is in an operating state and a capacity ratio of the photovoltaic module corresponding to each inverter of the plurality of inverters that is in the operating state; and an allocation module 802 configured to allocate a total target active power of the inverter system based on the overload power of each of the plurality of inverters and the capacity ratio of the photovoltaic module corresponding to each inverter of the plurality of inverters to obtain a target active power of each of the plurality of inverters.

In some embodiments, an inverter system is further provided. The inverter system includes the above-mentioned control apparatus, storage medium, or power allocation apparatus for the inverter system.

In some embodiments, a photovoltaic power station is further provided. The photovoltaic power station includes the above-mentioned control apparatus, storage medium, power allocation apparatus for the inverter system, or the inverter system.

It should be noted that relevant detailed descriptions of the power allocation method for the inverter system, the corresponding technical effects, and the like are similarly applicable to the control apparatus, the storage medium, the power allocation apparatus for the inverter system, the inverter system, and the photovoltaic power station of the present disclosure. Reference can be made to the embodiments described above, and thus details thereof will be omitted here.

It should be noted that, the logic and/or steps described in the flowchart or otherwise depicted herein, for example, may be considered as a fixed sequence list of executable instructions for implementing logical functions, and may be specifically implemented in any computer-readable medium for use for, or in conjunction with, an instruction execution system, apparatus, or device, such as a computer-based system, a system including a processor, or other systems that may fetch and execute instructions from the instruction execution system, apparatus, or device. For purposes of this disclosure, the "computer-readable medium" may be any apparatus that can include, store, communicate, propagate, or transport the program for use for, or in conjunction with, the instruction execution system, apparatus, or device. More specific examples (a non-exhaustive list) of the computer-readable medium include: an electrical connection portion having one or more of wires, a portable computer disk cartridge (a magnetic device), a random access memory (RAM), a read-only memory (ROM), an erasable programmable read-only memory (EPROM or Flash memory), a fiber optical device, and a portable compact disc read-only memory (CD-ROM). In addition, the computer-readable medium may even be paper or other suitable medium on which the program may be printed, since the program may be obtained electronically by, for example, optical scanning of the paper or other medium followed by editing, interpretation or other suitable processing if necessary, and then stored in a computer memory.

It should be understood that each part of the present disclosure can be implemented in hardware, software, firmware or any combination thereof. In the above embodiments, multiple steps or methods can be implemented by using software or firmware stored in a memory and executed by a suitable instruction execution system. For example, when implemented in hardware, as in another embodiment, it can be implemented by any one or combination of the following technologies known in the art: a discrete logic circuit having logic gate circuits for implementing logical functions on data signals, an application-specific integrated circuit with suitable combined logic gate circuits, a Programmable Gate Array (PGA), a Field Programmable Gate Array (FPGA), etc.

In the present disclosure, the description with reference to the terms "an embodiment," "some embodiments," "an example," "a specific example," or "some examples," etc., means that specific features, structures, materials, or characteristics described in conjunction with the embodiment(s) or example(s) are included in at least one embodiment or example of the present disclosure. The appearances of the above phrases in various places throughout this specification are not necessarily referring to the same embodiment or example. In addition, the particular features, structures, materials, or characteristics described may be combined in any suitable manner in one or more embodiments or examples.

In addition, the terms such as "first" "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two or three, unless otherwise specifically defined.

In the present disclosure, unless otherwise clearly specified and limited, terms, such as "mounting," "connect," "connect to," "fixed to," or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present disclosure can be understood according to specific circumstances.

Although the embodiments of the present disclosure have been shown and described above, it should be understood that the above-mentioned embodiments are exemplary and should not be construed as limiting to the present disclosure. Those skilled in the art can make changes, modifications, substitutions, and alternations to the above-mentioned embodiments within the scope of the present disclosure.

## Claims

1. A power allocation method for an inverter system, wherein the inverter system comprises a plurality of inverters, a direct current side of each of the plurality of inverters being connected to a photovoltaic module, and alternating current sides of the plurality of inverters being connected in parallel, the method comprising:
obtaining an overload power of each of the plurality of inverters that is in an operating state and a capacity ratio of the photovoltaic module corresponding to each inverter of the plurality of inverters that is in the operating state; and
allocating a total target active power of the inverter system based on the overload power of each of the plurality of inverters and the capacity ratio of the photovoltaic module corresponding to each inverter of the plurality of inverters to obtain a target active power of each of the plurality of inverters.

2. The method according to claim 1, wherein said allocating the total target active power of the inverter system based on the overload power of each of the plurality of inverters and the capacity ratio of the photovoltaic module corresponding to each inverter of the plurality of inverters to obtain the target active power of each of the plurality of inverters comprises:
pre-allocating the total target active power based on the capacity ratio of the photovoltaic module corresponding to each inverter of the plurality of inverters to obtain an initial active power of each inverter; and
adjusting the initial active power of each inverter based on the overload power and the initial active power of each inverter to obtain the target active power of each inverter.

3. The method according to claim 2, wherein said pre-allocating the total target active power based on the capacity ratio of the photovoltaic module corresponding to each inverter of the plurality of inverters to obtain the initial active power of each inverter comprises:
obtaining a total capacity ratio of photovoltaic modules corresponding to the plurality of inverters; and
obtaining a ratio of the capacity ratio of the photovoltaic module corresponding to each inverter to the total capacity ratio, and obtaining a product of the ratio and the total target active power to obtain the initial active power of each inverter.

4. The method according to claim 2, wherein said adjusting the initial active power of each inverter based on the overload power and the initial active power of each inverter to obtain the target active power of each inverter comprises:
sorting the plurality of inverters in a descending order of initial active powers of the plurality of inverters;
in response to an initial active power of an i-th inverter being greater than an overload power of the i-th inverter, determining the overload power as the target active power of the i-th inverter;
obtaining an active power difference between the initial active power of the i-th inverter and the overload power of the i-th inverter;
allocating the active power difference based on the capacity ratio of the photovoltaic module corresponding to each inverter from the (i+1)-th inverter to the n-th inverter to obtain a power adjustment amount of each inverter from the (i+1)-th inverter to the n-th inverter; and
obtaining a sum of the power adjustment amount and an initial active power of each inverter from the (i+1)-th inverter to the n-th inverter to update the initial active power of each inverter from the (i+1)-th inverter to the n-th inverter and updating i=i+1, and returning to the step of determining the overload power as the target active power of the i-th inverter in response to the initial active power of the i-th inverter being greater than the overload power of the i-th inverter, where 1≤i<n, n is a total number of the plurality of inverters that are in an operating state, and i starts from 1.

5. The method according to any one of claims 1 to 4, further comprising, subsequent to said obtaining the target active power of each of the plurality of inverters:
allocating a total target reactive power of the inverter system based on the target active power and a rated reactive power of each inverter to obtain a target reactive power of each inverter.

6. The method according to claim 5, wherein said allocating the total target reactive power of the inverter system based on the target active power and the rated reactive power of each inverter to obtain the target reactive power of each inverter comprises:
determining a maximum reactive power of each inverter based on the target active power and an apparent power of each inverter;
pre-allocating the total target reactive power based on the maximum reactive power of each inverter to obtain an initial reactive power of each inverter; and
determining the target reactive power of each inverter based on the initial reactive power, the rated reactive power, the maximum reactive power, and the target active power of each inverter.

7. The method according to claim 6, wherein said pre-allocating the total target reactive power based on the maximum reactive power of each inverter to obtain an initial reactive power of each inverter comprises:
obtaining a total maximum reactive power of the plurality of inverters; and
obtaining a ratio of the maximum reactive power of each inverter to the total maximum reactive power of the plurality of inverters, and obtaining a product of the ratio and the total target reactive power to obtain the initial reactive power of each inverter.

8. The method according to claim 6, wherein said determining the target reactive power of each inverter based on the initial reactive power, the rated reactive power, the maximum reactive power, and the target active power of each inverter comprises:
sorting the plurality of inverters in a descending order of initial reactive powers of the plurality of inverters;
obtaining a difference between the total target active power and a sum of target active powers of all inverters ranking higher than an j-th inverter to obtain a remaining total active power;
in response to the remaining total active power being smaller than a product of a reactive power of the j-th inverter and a number of inverters from the j-th inverter to the n-th inverter, and the initial reactive power of the j-th inverter being greater than a rated reactive power of the j-th inverter, determining the rated reactive power as the target reactive power of the j-th inverter, wherein the reactive power of the j-th inverter is a smaller value among a maximum reactive power of the j-th inverter and the rated reactive power of the j-th inverter; and
obtaining a reactive power difference between the initial reactive power of the j-th inverter and the rated reactive power of the j-th inverter, and obtaining a sum of the reactive power difference and the initial reactive power of an (j+1)-th inverter to update the initial reactive power of the (j+1)-th inverter and updating j=j+1, and returning to the step of obtaining the difference between the total target active power and the sum of target active powers of all inverters ranking higher than the j-th inverter to obtain the remaining total active power, where 1≤j<n, n is a total number of inverters that are in an operating state, and j starts from 1.

9. The method according to claim 8, wherein said determining the target reactive power of each inverter based on the initial reactive power, the rated reactive power, the maximum reactive power, and the target active power of each inverter further comprises:
in response to the remaining total active power being greater than or equal to a product of the reactive power of the j-th inverter and the number of inverters from the j-th inverter to the n-th inverter, obtaining a ratio of the remaining total active power to the number of inverters from the j-th inverter to the n-th inverter to obtain a target reactive power of each inverter from the j-th inverter to the n-th inverter and updating j=j+1, and returning to the step of obtaining the difference between the total target active power and the sum of target active powers of all inverters ranking higher than the j-th inverter to obtain the remaining total active power.

10. A control apparatus, comprising:
a memory having a program, instructions, or codes stored thereon; and
a processor configured to execute the program, the instructions, or the codes in the memory to perform the power allocation method for the inverter system according to any one of claims 1 to 9.

11. A computer-readable storage medium, having a computer program stored thereon, wherein the computer program, when loaded by a processor, performs the power allocation method for the inverter system according to any one of claims 1 to 9.

12. A power allocation apparatus for an inverter system, wherein the inverter system comprises a plurality of inverters, a direct current side of each of the plurality of inverters being connected to a photovoltaic module, and alternating current sides of the plurality of inverters being connected in parallel, the apparatus comprising:
an obtaining module configured to obtain an overload power of each of the plurality of inverters that is in an operating state and a capacity ratio of the photovoltaic module corresponding to each inverter of the plurality of inverters that is in the operating state; and
an allocation module configured to allocate a total target active power of the inverter system based on the overload power of each of the plurality of inverters and the capacity ratio of the photovoltaic module corresponding to each inverter of the plurality of inverters to obtain a target active power of each of the plurality of inverters.

13. An inverter system, comprising:
the control apparatus according to claim 10; or
the computer-readable storage medium according to claim 11; or
the power allocation apparatus for the inverter system according to claim 12.

14. A photovoltaic power station, comprising:
the control apparatus according to claim 10; or
the computer-readable storage medium according to claim 11; or
the power allocation apparatus for the inverter system according to claim 12; or
the inverter system according to claim 13.
